# EUROPÄISCHE PATENTSCHRIFT

(11) **EP 4 097 840 B1**
(45) Veröffentlichungstag und Bekanntmachung des Hinweises auf die Patenterteilung: **10.12.2025**
(21) Anmeldenummer: 20829534.5
(22) Anmeldetag: 11.12.2020
(51) Int. Cl.: H02P 29/028, H02P 3/04, H02P 1/02, G05B 19/042, H02M 1/32

(54) **VORRICHTUNG UND VERFAHREN ZUM BETREIBEN EINES ANTRIEBSSYSTEMS**
DEVICE AND METHOD FOR OPERATING A DRIVE SYSTEM
DISPOSITIF ET PROCÉDÉ PERMETTANT DE FAIRE FONCTIONNER UN SYSTÈME D'ENTRAÎNEMENT

(30) Priorität: 31.01.2020 DE 102020000646
(43) Veröffentlichungstag der Anmeldung: 07.12.2022
(73) Patentinhaber: SEW-EURODRIVE GmbH & Co. KG, 76646 Bruchsal (DE)
(72) Erfinder: NORENBURG, Benjamin, 76689 Karlsdorf-Neuthard (DE); SENFT, Christian, 76228 Karlsruhe-Grünwettersbach (DE); RICHTER, Sebastian, 69120 Heidelberg (DE)
(86) Internationale Anmeldenummer: PCT/EP2020/025573
(87) Internationale Veröffentlichungsnummer: WO 2021/151456

(56) Entgegenhaltungen:
- EP-A1- 3 462 193
- EP-A1- 3 664 283
- WO-A1-2010/103016
- WO-A1-2019/026125
- WO-A1-2019/198257
- DE-A1- 102005 006 286
- DE-A1- 102005 008 050
- US-A1- 2017 141 581

## Beschreibung

Die Erfindung betrifft ein Verfahren zum Betreiben eines Antriebssystems.

Dieses Antriebssystem weist ein Netzteil, einen Frequenzumrichter und eine Antriebseinheit auf.

Aus der DE102013005237A1 ist ein Antriebssystem und Verfahren zum Betreiben eines Antriebssystems bekannt, aufweisend einen Winkelsensor, mit welchem die Winkelstellung der Rotorwelle eines Elektromotors erfasst wird, und einen Umrichter, welcher den Motor mittels eines Versorgungskabels speist.

Aus der DE102013007649B4 ist ein System und Verfahren zum Betreiben eines Systems bekannt, umfassend einen über ein als Versorgungskabel fungierendes Verbindungskabel von einem Umrichter gespeisten Elektromotor, wobei am Motor eine motorseitige Signalelektronik angeordnet ist, insbesondere wobei die Signalelektronik zumindest einen Sensor, einen Aktuator und/oder einen Datenspeicher umfasst, und Signale über das Verbindungskabel
von der Signalelektronik an eine umrichterseitige Signalelektronik übertragen werden.

Aus der DE 10 2007 040 425 A1 ist ein Verfahren zur Vergabe einer Adresse aufgrund einer außerhalb des Bussystems erfolgenden Aktion bekannt.

Aus der EP 2 787 405 A1 ist ein Verfahren zum Betrieb einer elektrischen Anlage bekannt.

Aus der DE 10 2007 040 425 A1 ist ein Elektromotor mit Anschlusskasten bekannt, in welchem ein Modul angeordnet ist, an welches Sensoren und Aktoren anschließbar sind.

Aus der DE 10 2007 007 601 B4 ist ein Verfahren zur Optimierung eines Steuerprogramms bekannt.

Aus der DE 10 2006 036 770 A1 ist ein Verfahren zur Inbetriebnahme von mindestens einem Feldgerät bekannt.

Aus der DE 10 2005 006 286 A1 ist als nächstliegender Stand der Technik ein elektrischer Antrieb bekannt.

Aus der US 2017 / 141581 A1 ist ein Auswahlgerät zum Auswählen eines Motorsystems bekannt.

Aus der WO 2019 / 198257 A1 ist eine Aktuatorsteuerung bekannt.

Aus der DE 10 2005 008 050 A1 ist ein Verfahren zum Austausch von Informationsdaten zwischen einem elektrischen Verbraucher und einem Betriebsmittel sowie Verbrauchererkennungseinheit bekannt.

Aus der WO 2019 / 026125 A1 ist eine Motorantriebsvorrichtung bekannt.

Die Aufgabe der Erfindung ist eine Weiterentwicklung der Energieübertragung des Antriebssystems.

Erfindungsgemäß wird die Aufgabe mit einem Verfahren nach den in Anspruch 1 angegebenem Merkmalen gelöst.

Bei der erfindungsgemäßen Energieübertragung wird die von dem Netzteil erzeugte elektrische Energie zu der Antriebseinheit, die einen Elektromotor und mindestens eine weitere Komponente umfasst, übertragen und von der weiteren Komponente der Antriebseinheit umgesetzt, um dort elektrische Arbeit zu verrichten.

Dabei hat der Frequenzumrichter weder eine Information über die zur Verfügung stellbare elektrische Energie des Netzteils noch eine Information über die benötigte elektrische Energie zum Betreiben der weiteren Komponente der Antriebseinheit. Sind diese beiden Informationen nämlich nicht ausreichend aufeinander abgestimmt, führt dies jedoch zu einem Fehlverhalten bis hin zu einem Totalausfall des gesamten Antriebssystems.

Erfindungsgemäß erlangt jedoch der Frequenzumrichter vor dem Übergang in den regulären Betriebszustand Zugriff auf diese Informationen, wobei er diese Informationen über einen logischen Vergleich plausibilisiert und das Ergebnis dieser Plausibilisierung dazu verwendet, um den Systemzustand des Antriebssystems entsprechend zu setzen.

Damit ist es einerseits möglich, das Antriebssystem vor Beschädigung durch einen Fehler in der Auslegung oder durch einen fehlerhaften Aufbau bzw. einer unerlaubten Kombination der Systemkomponenten zu schützen und darüber hinaus einem Anwender Unterstützung bei der Ursachenforschung, insbesondere bei der Fehlersuche und Fehlerbehebung, anzubieten. Andererseits besteht auch die Möglichkeit das Antriebssystem nur mit einem minimalen elektrischen Energiebedarf, beispielsweise durch einen nur eingeschränkten Funktionsumfang der Antriebseinheit, zu betreiben.

Wichtige Merkmale des Verfahrens zum Betrieb des Antriebssystems sind, dass sich das Antriebssystem in einem Parametrierzustand befindet, wobei in einem ersten Schritt ein Frequenzumrichter eine erste Information über die maximal zur Verfügung stehender elektrischer Energie eines Netzteils und/oder eine zweite Information über den elektrischen Energiebedarf einer weiteren Komponente der Antriebseinheit vom Anwender über eine Konfigurationssoftware mitgeteilt bekommen kann, und/oder wobei der Frequenzumrichter die erste Information und/oder die zweite Information aus mindestens einem elektronischen Typenschild auslesen kann, wobei in einem zweiten Schritt der Frequenzumrichter die erste Information und die zweite Information auf Vollständigkeit prüft, wobei eine fehlende erste Information und/oder fehlende zweite Information durch ein Messverfahren ermittelt wird, wobei in einem dritten Schritt der Frequenzumrichter die erste Information und die zweite Information auf Plausibilität prüft, wobei eine erste Information größer als oder gleich der zweiten Information zu einem Übergang in einen regulären Betriebszustand (B1) führt, wobei eine erste Information kleiner als der zweiten Information zu einem Übergang in einen Fehlerzustand oder einen Betriebszustand mit reduziertem, elektrischem Energieverbrauch in der Antriebseinheit führt.

Bei einer weiteren vorteilhaften Ausgestaltung werden im regulären Betriebszustand ein tatsächlicher Energiebedarf der weiteren Komponente der Antriebseinheit und/oder eine tatsächlich zur Verfügung stehende, elektrische Energie des Netzteils überwacht, wobei eine toleranzmäßig zu große Abweichung von der ersten Information und/oder der zweiten Information zu einem Übergang in den Fehlerzustand führt.

Bei einer Vorrichtung eingerichtet zum Durchführen eines vorgenannten erfindungsgemäßen Verfahrens ist wichtig, dass das Antriebssystem den Frequenzumrichter, die Antriebseinheit und das Netzteil umfasst, wobei die Antriebseinheit einen Elektromotor und mindestens eine weitere Komponente, bestehend aus mindestens einem Sensor-, Aktor- und/oder Datenspeicherelement, umfasst und wobei der Frequenzumrichter die weitere Komponente der Antriebseinheit über das Netzteil mit Energie versorgt. Das Antriebssystem ist dadurch gekennzeichnet, dass der Frequenzumrichter dazu ausgebildet ist, eine erste Information über die, maximal zur Verfügung stehende elektrische, Energie des Netzteils zu erhalten, wobei der Frequenzumrichter dazu ausgebildet ist, eine zweite Information über den elektrischen Energiebedarf der weiteren Komponente der Antriebseinheit zu erhalten, wobei der Frequenzumrichter dazu ausgebildet ist, die erste Information gegen die zweite Information zu plausibilisieren, wobei das Entscheidungskriterium für die Plausibilisierung durch einen logischen Vergleich der ersten Information mit der zweiten Information gebildet wird und wobei der Frequenzumrichter dazu ausgebildet ist, in Abhängigkeit des Ergebnisses dieser Plausibilisierung den Systemzustand des Antriebssystems anzupassen.

Unter Antriebssystem wird hierbei ein System verstanden, das elektrische Energie in rotatorische und/oder lineare Bewegungs- und Stellvorgänge überführt. Ein Antriebssystem besteht dabei aus einem Frequenzumrichter und mindestens einer damit verbundenen Antriebseinheit.

Die Aufgabe des Frequenzumrichters besteht darin, aus einer beliebigen Eingangsspannung, beispielsweise einer Wechsel- oder Gleichspannung, eine in der Frequenz und Amplitude veränderbare Wechselspannung zu erzeugen, die dafür geeignet ausgeführt ist, eine elektrische Maschine bzw. einen Elektromotor, insbesondere einen Synchron- oder Asynchronmotor, direkt zu versorgen. Der Frequenzumrichter weist meist auch mehrere Sensormesskanäle auf, mit deren Hilfe der Frequenzumrichter die Steuerung und Regelung der elektrischen Maschine durchführt und überwacht. Dabei ist der Frequenzumrichter auch ausgebildet, diesen Sensormesskanälen elektrische Energie für deren Betrieb zur Verfügung zu stellen.

Als Antriebseinheit wird eine konstruktive Einheit bezeichnet, die mittels Energieumformung elektrische Energie in Bewegungsenergie wandelt. Die Antriebseinheit besteht dabei aus einem Elektromotor, der mittels Frequenzumrichter versorgt wird und meist mindestens eine weitere Komponente, bestehend aus Sensor-, Aktor- und/oder Datenspeicherelemente, wie beispielsweise Drehgeber, Streckengeber, Temperaturmessfühler, Vibrationsmessfühler, Einbaulagesensor, Gyrosensor, GPS-Empfänger, Gravitationssensor, Hall-Sensor, elektronisch auslesbares Typenschild und/oder ein oder mehrere elektronische Bremsen, umfasst. Die Antriebseinheit kann hierbei auch ein Getriebe aufweisen, welches direkt mit dem Elektromotor mechanisch verbunden und dazu ausgebildet ist, das Drehmoment bzw. die Drehzahl des Elektromotors optimal an die Bedürfnisse einer industriellen Anwendung anzupassen. Es ist hierbei auch vorstellbar, dass diese konstruktive Einheit den Frequenzumrichter mit umfasst, sodass das Antriebssystem sehr kompakt ausführbar ist.

Als Netzteil wird ein eigenständiges Gerät oder eine Baugruppe verstanden, welches zur elektrischen Energieversorgung von Geräten oder Baugruppen verwendet wird, die andere Spannungen und Ströme benötigen, als die vom allgemeinen Stromnetz bereitgestellt werden.

Als elektrische Energie wird eine Energieform bezeichnet, die mittels Elektrizität übertragen oder in elektrischen Feldern gespeichert wird.

Unter maximal zur Verfügung stehender elektrischer Energie ist die Energiemenge gemeint, die
eine Erzeugungseinheit, beispielsweise ein Netzteil, einem Verbraucher zur Verfügung stellen kann. Dabei ist die Erzeugungseinheit physikalisch begrenzt in ihrer maximal einem Verbraucher zur Verfügung stellbaren elektrischen Energie.

Der elektrische Energiebedarf beschreibt hier den Bedarf an elektrischer Energie, die von einem elektrischen Gerät, beispielsweise einer Komponente einer Antriebseinheit, während eines definierten Zeitabschnitts umgesetzt wird, um ihre jeweilige Funktion erfüllen zu können.

Unter plausibilisieren ist hier das Anwenden eines Beurteilungskriteriums gemeint, welches zu einer entsprechenden Reaktion führt. Dabei wird als Beurteilungskriterium ein logischer Vergleich von der ersten Information mit der zweiten Information durchgeführt, als dessen Reaktion entsprechend der Systemzustand des Antriebssystems angepasst wird.

Unter Systemzustand ist das ganzheitliche Verhalten des gesamten Antriebssystems zu einem bestimmten Zeitpunkt zu verstehen. Ein Antriebssystem hat üblicherweise eine Vielzahl unterschiedlicher Zuständen. Im speziellen wird hier lediglich unterschieden zwischen den Systemzuständen "regulärer Betriebszustand" B1, "Betriebszustand mit reduziertem elektrischem Energieverbrauch der Antriebseinheit" B2, "Parametrierzustand" P und "Fehlerzustand" F.

Dabei wird unter dem Begriff regulärer Betriebszustand B1 der Zustand verstanden, den eine voll funktionstüchtige Maschine oder Anlage, die keinerlei Mängel aufweist, besitzt. Befindet sich die jeweilige Maschine oder Anlage in ihrem entsprechenden regulären Betriebszustand, so ist sie einsatzbereit, funktioniert in der für sie vorgesehenen Art und Weise und weist keine Störungen oder Probleme auf, wobei im regulären Betriebszustand B1 des Antriebssystems der Frequenzumrichter dazu befähigt ist, auf alle Sensor-, Aktor und/oder Datenspeicherelemente der Antriebseinheit zuzugreifen, eine digitale Datenkommunikation mit diesen Sensor-, Aktor und/oder Datenspeicherelementen aufzubauen und von diesen Sensor-, Aktor und/oder Datenspeicherelementen Parameterwerte, Messdaten, die die Temperatur, die vorhandene Vibration, die Einbaulage, die relative oder absolute Winkel- bzw. Strecken-IST-Position der Antriebseinheit charakterisieren und/oder die Information des elektronischen Typenschilds der Antriebseinheit beinhalten, anzufordern, die von diesen Sensor-, Aktor und/oder Datenspeicherelementen als Antwort an den Frequenzumrichter übermittelt werden und die vom Frequenzumrichter selbst für die Steuerung bzw. Regelung der Antriebseinheit verwendet werden und/oder die vom Frequenzumrichter an eine nachgelagerte Sicherheitseinrichtung übermittelt werden, wobei diese Sicherheitseinrichtung diese Parameterwerte mittels einer Sicherheitsfunktion wie beispielsweise SAR (Safe acceleration range), SBC (Safe brake control), SBT (Safe brake test), SCA (Safe cam), SDI (Safe direction), SLA (Safely-limited acceleration), SLI (Safely-limited increment), SLP (Safe limited position), SLS (Safely limited speed), SLT (Safely-limited torque), SMT (Safe motor temperature), SOS (Safe operation stop), SP (Safe position), SS1 (Safe stop 1), SS2 (Safe stop 2), SSM (Safe speed monitor), SSR (Safe speed range), STO (Safe torque off), STR (Safe torque range) oder einer beliebigen Kombination dieser Sicherheitsfunktionen überwacht und wobei die Sicherheitseinrichtung dem Frequenzumrichter eine Grenzwertüberschreitung der verwendeten Sicherheitsfunktionen unverzüglich mitteilt.

Unter Betriebszustand B2 mit reduziertem elektrischem Energieverbrauch der Antriebseinheit ist ein Systemzustand zu verstehen, wobei der Frequenzumrichter nur dazu befähigt ist, auf eine reduzierte eingeschränkte Anzahl an Sensor-, Aktor- und/oder Datenspeicherelementen der weiteren Komponente aktiv zuzugreifen, der mindestens aber das elektronische Auslesen der zweiten Information über den elektrischen Energiebedarf der Antriebseinheit, beispielsweise als Bestandteil des elektronischen Typenschilds in der Antriebseinheit, ermöglicht und wobei die zusätzlich in der Antriebseinheit vorhandenen weiteren Sensor-, Aktor- und/oder Datenspeicherelemente der weiteren Komponente hierbei deaktiviert sind, insbesondere um den Stromverbrauch, während des elektronischen Auslesens der zweiten Information über den elektrischen Energiebedarf der Antriebseinheit zu minimieren.

In diesem Betriebszustand B2 ist der Frequenzumrichter nur in der Lage, den Elektromotor mit einer reduzierten eingeschränkten Anzahl an Parameterwerten, die von der reduzierten eingeschränkten Anzahl an Sensor-, Aktor- und/oder Datenspeicherelementen der weiteren Komponente kommen, zu betreiben, wobei der Funktionsumfang, bedingt durch den reduzierten Satz an Parameterwerten hierbei eingeschränkt ist, die die vom Frequenzumrichter selbst für die Steuerung bzw. Regelung der Antriebseinheit verwendet werden und/oder die vom Frequenzumrichter an eine nachgelagerte Sicherheitseinrichtung zur Überwachung der Parameterwerte übermittelt werden.

Vorteilhafterweise ist bei dieser Ausgestaltung ein ausfallsicherer Betrieb des Antriebssystems möglich, da die Kompatibilität der Systemkomponenten, insbesondere deren Konfiguration, selbständig vom Frequenzumrichter überprüft wird. Dies reduziert die Inbetriebnahme-Zeit und trägt zu einer Erhöhung der Anlagenverfügbarkeit bei.

Bei einer weiteren vorteilhaften Ausgestaltung erhält der Frequenzumrichter die erste Information und/oder die zweite Information während eines Parametrierzustands P des Antriebssystems.

Vorteilhafterweise werden bei dieser Ausgestaltung bereits vor Übergang in einen regulären Betriebszustand B1 die Kompatibilität der Systemkomponenten, insbesondere deren Konfiguration, überprüft. Dies führt dazu, dass schon während der Inbetriebnahme der Antriebseinheit Konfigurationsfehler frühzeitig erkannt werden, was in einer verbesserten Unterstützung während des Inbetriebnahme-Vorgangs resultiert.

Bei einer weiteren vorteilhaften Ausgestaltung wird die erste Information und/oder die zweite Information von einem Anwender über ein Mittel, insbesondere über eine Konfigurationssoftware und/oder einem DIP-Schalter, dem Frequenzumrichter mitgeteilt. Unter DIP-Schalter ist hierbei eine Aneinanderreihung mehrerer kleiner Schalter, insbesondere Schiebeschalter, zu verstehen, die in einem gemeinsamen Gehäuse zusammengefasst sind, welches meist eine Bauform mit zwei parallel zueinander angeordneten Anschlussreihen besitzt, die direkt auf einer Leiterplatte aufgebracht werden und deren Schalterstellungen elektronisch auslesbar sind.

Vorteilhafterweise sind bei dieser Ausgestaltung herkömmliche Systemkomponenten, insbesondere auch ohne ein elektronisches Typenschild, nahtlos in das erfindungsgemäße Antriebssystem integrierbar.

Bei einer weiteren vorteilhaften Ausgestaltung liest der Frequenzumrichter die erste Information elektronisch von dem Netzteil und/oder die zweite Information elektronisch von der Antriebseinheit aus.

Unter elektronischem Auslesen der ersten bzw. der zweiten Information ist hierbei zu verstehen, dass sich dieser Parameterwert als Datum auf einem elektronisch auslesbaren Datenspeicherelement befindet, welcher ein fester Bestandteil eines eigenständigen Geräts oder einer Baugruppe, hier der weiteren Komponente der Antriebseinheit bzw. des Netzteils, ist. Dabei muss das Datenspeicherelement so mit dem Gerät oder der Baugruppe verbunden sein, dass dieses bei einem Austausch automatisch auch mitausgetauscht wird. Vorteilhafterweise ist bei dieser Ausgestaltung eine nutzerfreundliche Inbetriebnahme des Antriebssystems realisierbar, da der Frequenzumrichter die benötigten Informationen für die Plausibilisierung selbständig von der weiteren Komponente und/oder dem Netzteil ausliest.

Bei einer weiteren vorteilhaften Ausgestaltung ermittelt der Frequenzumrichter die erste Information und/oder die zweite Information durch einen Test.

Ist die erste Information und/oder die zweite Information auf elektronischem Wege nicht zugänglich, so hat der Frequenzumrichter die Möglichkeit einen Test durchzuführen, um diese beiden Informationen bzw. das Plausibilisierungsergebnis selbst abzuschätzen. Damit wird überprüft, dass die zur Verfügung stellbare elektrische Energie des Netzteils stets ausreicht, um die maximal benötigte Energie der weiteren Komponente der Antriebseinheit zur Verfügung zu stellen. Dieser Test wird beispielsweise nach einem Neustart der Anlage, während des Parametrierzustands P oder in regelmäßigen zeitlichen Abständen durchgeführt.

Vorteilhafterweise ist bei dieser Ausgestaltung eine nutzerfreundliche Inbetriebnahme des Antriebssystems realisierbar, da der Frequenzumrichter die benötigten Informationen für die Plausibilisierung bzw. das Plausibilisierungsergebnis selbständig durch einen Test ermittelt, wodurch auch ältere Systemkomponenten, die diese Information noch nicht elektronisch auslesbar auf einem Datenspeicherelement hinterlegt haben, verwendbar sind.

Bei einer weiteren vorteilhaften Ausgestaltung umfasst der Frequenzumrichter das Netzteil, wobei die erste Information bereits werksseitig bei Herstellung im Frequenzumrichter hinterlegt wird.

Dabei wird die erste Information des integrierten Netzteils beispielsweise während der Bestückung oder nach der Komplementierung direkt beim Hersteller des Frequenzumrichters direkt in ein elektronisch auslesbares Datenspeicherelement gespeichert.

Vorteilhafterweise ist bei dieser Ausgestaltung, bei der das Netzteil bereits im Frequenzumrichter integriert ausgeführt ist, eine platzsparende Variante realisierbar, die zudem eine einfache Handhabung für den Nutzer ermöglicht und zusätzliche Lagerhaltungskosten, bedingt durch ein zusätzliches Netzteil, reduziert.

Bei einer weiteren vorteilhaften Ausgestaltung weist die Antriebseinheit eine Betriebsart mit reduziertem elektrischem Energiebedarf auf, wobei diese Betriebsart mindestens das elektronische Auslesen der zweiten Information ermöglicht und wobei der reduzierte elektrische Energiebedarf einen Maximalwert sicher nicht überschreitet. Vorteilhafterweise ist bei dieser Ausgestaltung eine Standardgröße eines Netzteils definierbar, bei dessen Verwendung das elektronische auslesen der zweiten Information stets möglich ist, auch wenn der maximal mögliche elektrische Energiebedarf der weiteren Komponenten der Antriebseinheit größer ist als die maximal zur Verfügung stehende Energie des Netzteils.

Bei einer weiteren vorteilhaften Ausgestaltung startet die Antriebseinheit nach einem Neustart immer in der Betriebsart mit reduziertem elektrischem Energiebedarf. Unter Neustart bzw. Power-UP werden hier das erstmalige und/oder das erneute Einschalten des Antriebssystems, insbesondere nach einer Änderung der Konfiguration und/oder nach Tausch einer Systemkomponente, verstanden. Während des Neustarts wird dabei das Antriebssystem meist von einem ruhenden, energielosen Systemzustand in einen energieverbrauchenden Systemzustand überführt und/oder die im Antriebssystem enthaltenen Recheneinheiten werden mit der aktuell gültigen Konfiguration (aktueller Programmablauf, aktueller Datensatz) geladen.

Vorteilhafterweise ist bei dieser Ausgestaltung auch nach einer Änderung der Konfiguration und/oder nach Tausch einer Systemkomponente sichergestellt, dass das elektronische Auslesen der zweiten Information stets möglich ist.

Bei einer weiteren vorteilhaften Ausgestaltung stellt das Netzteil mindestens den Maximalwert an elektrischer Energie zur Verfügung, den die Antriebseinheit in der Betriebsart mit reduziertem elektrischem Energiebedarf benötigt.

Vorteilhafterweise ist bei dieser Ausgestaltung das Netzteil in der Lage, der Antriebseinheit ausreichend Energie zur Verfügung zu stellen, um dem Frequenzumrichter stets das Auslesen der zweiten Information, insbesondere während eines Neustarts, zu ermöglichen.

Bei einer weiteren vorteilhaften Ausgestaltung wechselt das Antriebssystem in den regulären Betriebszustand B1, wenn die erste Information größer oder gleich der zweiten Information ist.

Damit ist sichergestellt, dass das Antriebssystem nur dann mit vollem Funktionsumfang betrieben wird, wenn auch sicher ausreichend elektrische Energie zum Betreiben der weiteren Komponenten der Antriebseinheit zur Verfügung steht.

Bei einer weiteren vorteilhaften Ausgestaltung wechselt das Antriebssystem in den Fehlerzustand F, wenn die erste Information kleiner als die zweite Information ist. Damit wird dem Anwender schon frühzeitig ein Fehler gemeldet, insbesondere mit der Beschreibung der Fehlerursache, beispielsweise der Verwendung eines nicht für die Anwendung geeigneten Netzteils, wobei das Antriebssystem in einen sicheren Systemzustand überführt wird. Somit wird ein gefahrbringendes Verhalten der Antriebseinheit, beispielsweise durch einen sehr wahrscheinlichen plötzlichen Kommunikationsabbruch von system-wichtigen Sensor- und/oder Aktor-Daten während des Betriebes, verhindert.

Bei einer weiteren vorteilhaften Ausgestaltung wechselt das Antriebssystem in den Betriebszustand B2, wenn die erste Information kleiner als die zweite Information ist, wobei die Antriebseinheit nur in der Betriebsart mit reduziertem elektrischem Energiebedarf betrieben wird.

Damit ist es möglich, die Variantenvielfalt der Systemkomponenten des Antriebssystems zu reduzieren, indem stets eine Antriebseinheit mit vollem Funktionsumfang verwendet wird, wobei der Frequenzumrichter und das Netzteil an den benötigten Funktionsumfang anpassbar sind.

Vorteilhafterweise ist bei dieser Ausgestaltung das Antriebssystem dergestalt betreibbar, dass die Abfrage der zweiten Information stets durchführbar ist. Dadurch kann eine mögliche Fehlerursache, insbesondere verursacht durch ein zu schwaches verwendetes Netzteil im Antriebssystem, dem Anwender sicher mitgeteilt werden. Dadurch ist die Zeitdauer bei einer Inbetriebnahme oder im Servicefall deutlich reduzierbar.

Bei einer weiteren vorteilhaften Ausgestaltung überwacht der Frequenzumrichter den tatsächlichen elektrischen Energiebedarf der Antriebseinheit, wobei der tatsächliche elektrische Energiebedarf gemessen und/oder ein Datenaustausch mit der Antriebseinheit überprüft wird, wobei das Antriebssystem in den Fehlerzustand F wechselt, wenn der tatsächliche elektrische Energiebedarf größer als die zweite Information ist und/oder der Datenaustausch mit der Antriebseinheit nicht möglich ist.

Mit Überwachen ist hierbei die zielgerichtete Beobachtung und Informationserhebung über die Kenngröße der elektrischen Energie zu verstehen, die das Netzteil der weiteren Komponente der Antriebseinheit bereitstellt und die vom Frequenzumrichter durchgeführt wird. Diese Überwachung wird entweder damit realisiert, indem der tatsächliche elektrische Energiebedarf, insbesondere der tatsächlich fließende elektrische Strom- und/oder die elektrische Spannung, in der Anschlussleitung zwischen Netzteil und der weiteren Komponente der Antriebseinheit, meist innerhalb des Gehäuses des Frequenzumrichters, gemessen werden. Fließt hierbei ein zu großer elektrischer Strom und/oder ist ein Spannungseinbruch unterhalb eines für den sicheren Betrieb der weiteren Komponente der Antriebseinheit notwendigen Spannungsschwellwerts, detektierbar, so wird das Antriebssystem in den Fehlerzustand F versetzt.

Denkbar ist hierbei auch anstelle der Strom- bzw. Spannungsmessung oder ergänzend zu diesen Messungen zusätzlich den Datenaustausch zwischen Frequenzumrichter und weiterer Komponente der Antriebseinheit auf Kommunikationsfehler hin zu überwachen. Unter Datenaustausch, insbesondere unter elektronischem Datenaustausch ist hierbei der Austausch von Daten unter Nutzung elektronischer Transferverfahren zu verstehen. Treten in einem bestimmten Zeitintervall gehäuft Fehler bei diesem Datenaustausch, verglichen mit einem Zeitintervall mit normaler Datenausfallrate, bedingt durch den Einsatz des Antriebssystems in einem rauen industriellen Umfeld, auf, so wird das Antriebssystem ebenfalls in den Fehlerzustand F überführt.

Vorteilhafterweise sind bei dieser Ausgestaltung frühzeitig eine Alterung von Systemkomponenten, Kurzschüsse und/oder zu lange Anschlussleitungen zwischen Frequenzumrichter und weiterer Komponente der Antriebseinheit erkennbar, womit das Antriebssystem im Fehlerfall in einen sicheren Systemzustand überführt werden kann.

Bei einer weiteren vorteilhaften Ausgestaltung überwacht der Frequenzumrichter die zur Verfügung gestellte elektrische Energie des Netzteils, wobei das Antriebssystem in den Fehlerzustand F wechselt, wenn die tatsächliche zur Verfügung stehende elektrische Energie kleiner als die erste Information ist.

Diese Überwachung wird entweder damit realisiert, indem die zur Verfügung gestellte elektrische Energie des Netzteils, insbesondere der zur Verfügung gestellte elektrische Strom- und/oder die elektrische Spannung, in der Anschlussleitung zwischen Netzteil und der weiteren Komponente der Antriebseinheit, meist innerhalb des Gehäuses des Frequenzumrichters, gemessen werden. Ist hierbei ein Spannungseinbruch, unterhalb eines, für den sicheren

Betrieb der weiteren Komponente der Antriebseinheit notwendigen, Spannungsschwellwerts, detektierbar, so wird das Antriebssystem in den Fehlerzustand F versetzt. Vorteilhafterweise ist bei dieser Ausgestaltung frühzeitig erkennbar, wenn das Netzteil nicht der Spezifikation entspricht und/oder wenn nicht die geeignete Kombination aus Komponenten zum Aufbau des Antriebssystems verwendet wurden.

Bei einer weiteren vorteilhaften Ausgestaltung testet der Frequenzumrichter die Funktionsfähigkeit des Antriebssystems, indem die Antriebseinheit in einer Betriebsart mit maximalem elektrischem Energiebedarf betrieben wird.

Unter testen ist hierbei ein methodischer Versuch zu verstehen, mit dem festgestellt wird, ob die vom Netzteil zur Verfügung stellbare elektrische Energie ausreicht, um das Antriebssystem voll funktionsfähig und fehlerfrei zu betreiben. Dafür ist vorstellbar, alle weiteren Komponenten der Antriebseinheit als Energieverbraucher zu aktivieren. Vorteilhafterweise ist bei dieser Ausgestaltung ein Test möglich, bei dem überprüfbar ist, dass das Antriebssystem in der aktuellen Zusammenstellung der Systemkomponenten auch unter Worst-Case Bedingungen voll funktionsfähig ist.

Bei einer weiteren vorteilhaften Ausgestaltung ist nur während des Tests der Funktionsfähigkeit des Antriebssystems eine zuschaltbare Last in der Antriebseinheit aktivierbar.

Hierbei ist als zusätzliche Last ein weiterer Verbraucher gemeint, beispielsweise ein hierfür geeignet ausgestalteter Widerstand, der entweder als zusätzlicher Verbraucher zusammen mit allen aktivierbaren weiteren Komponenten der Antriebseinheit für den Test verwendet wird, oder der anstelle der aktivierbaren weiteren Komponenten der Antriebseinheit als Substitut für den Test eingesetzt wird.

Vorteilhafterweise wird bei dieser Ausgestaltung die Worst-Case Bedingung für den Test weiter verschärf, womit die Verfügbarkeit des Antriebssystems im realen Betriebszustand weiter erhöht wird, da Ausfälle bedingt durch ein zu schwaches Netzteil unwahrscheinlicher werden.

Bei einer weiteren vorteilhaften Ausgestaltung wird im Fehlerzustand F über die Konfigurationssoftware eine Nachbestellung von Netzteil und/oder Antriebseinheit angeboten, wobei deren elektrische Eigenschaften an die erste Information und/oder die zweite Information angepasst sind.

Unter angepassten elektrischen Eigenschaften ist hierbei zu verstehen, dass insbesondere die Konfigurationssoftware die erste Information und/oder die zweite Information und/oder die Fehlerursache vom Frequenzumrichter mitgeteilt bekommt und daraus eine Empfehlung zur

Behebung des Fehlers ableitet. Durch ein Mittel, insbesondere durch ein Datenbanksystem des Antriebssystemherstellers, ist die Konfigurationssoftware auch befähigt, ein konkretes Netzteil bzw. eine konkrete Antriebseinheit vorzuschlagen, um damit die Fehlerursache zu beseitigen.

Vorteilhafterweise ist bei dieser Ausgestaltung dem Nutzer somit schnell eine Lösung für sein Problem anbietbar, insbesondere auch während der Erst-Inbetriebnahme des Antriebssystems.

Bei einer weiteren vorteilhaften Ausgestaltung können die erste Information und/oder die zweite Information lizenzabhängig begrenzt werden.

Unter lizenzabhängiger Begrenzung ist hierbei gemeint, dass ein Anwender nach Erhalt eines Mittels, einer Genehmigung oder Erlaubnis, meist in Form eines Lizenzschlüssels, die Funktionalität des Netzteils und/oder der Antriebseinheit erweitern kann.

Vorteilhafterweise ist bei dieser Ausgestaltung die Varianz und damit die Lagerkosten der Geräte weiter reduzierbar.

Bei einer weiteren vorteilhaften Ausgestaltung wird im Fehlerzustand F über die Konfigurationssoftware eine Lizenz-Freischaltung angeboten, wobei deren Eigenschaften an die erste Information und/oder die zweite Information angepasst sind.

Vorteilhafterweise ist bei dieser Ausgestaltung dem Nutzer schnell eine Lösung für sein Problem anbietbar. Idealerweise kann somit bei Bedarf Funktionalität nachgekauft werden ohne das Gerät oder die Baugruppe in der Anlage tauschen zu müssen.

Bei einer weiteren vorteilhaften Ausgestaltung sind sowohl die elektrische Energieversorgung der weiteren Komponente als auch der Datenaustausch mit der weiteren Komponente über eine gemeinsame Zweidrahtleitung, insbesondere über ein Koaxialkabel, realisiert.

Als Zweidrahtleitung wird hierbei ein mit Isolierstoffen ummantelter zweiadriger Verbund von Einzelleitungen bezeichnet, welcher der Übertragung von elektrischer Energie und/oder Daten zwischen dem Frequenzumrichter und der Antriebseinheit dienen.

Unter einem Koaxialkabel sind zweipolige Kabel mit konzentrischem Aufbau zu verstehen. Diese bestehen in der Regel aus einem Innenleiter, der mit konstantem Abstand von einem hohlzylindrischen Außenleiter umgeben angeordnet ist. Der Außenleiter schirmt dabei den Innenleiter vor elektromagnetischer Störstrahlung ab. Idealerweise ist das Koaxialkabel in einem Hybridkabel integriert ausgeführt, das zusätzliche Anschlussleitungen umfasst, die insbesondere zum Betrieben eines Elektromotors dienen.

Vorteilhafterweise ist bei dieser Ausgestaltung eine Fehlerquelle ausschließbar, da sowohl die Leitungen für die elektrische Energieversorgung als auch die Leitungen für die Datenkommunikation über dieselben Anschlussleitungen geführt werden.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

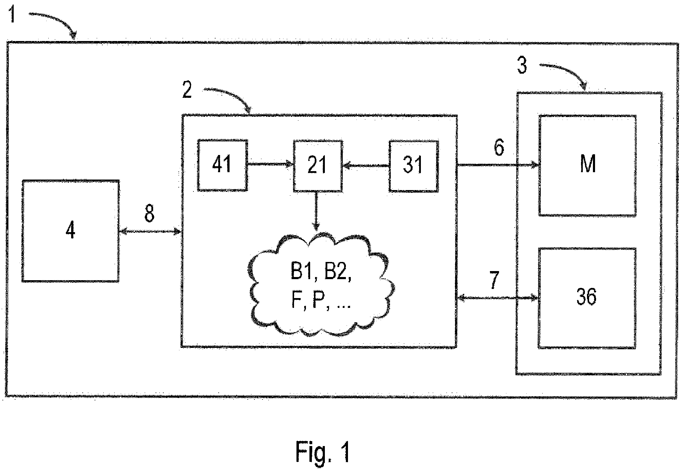

In der Figur 1 ist das erfindungsgemäße Antriebssystem (1) dargestellt. Dieses umfasst einen Frequenzumrichter (2), mindestens eine Antriebseinheit (3) und mindestens ein Netzteil (4).

Die Antriebseinheit (3) umfasst einen Elektromotor (M) und mindestens eine weitere Komponente (36), bestehend aus mindestens einem Sensor-, Aktor- und/oder Datenspeicherelement. Die weitere Komponente (36) umfasst Elemente wie Drehgeber, Streckengeber, Temperaturmessfühler, Vibrationsmessfühler, Einbaulagesensor, Gyrosensor, GPS-Empfänger, Gravitationssensor, Hall-Sensor, elektronisch auslesbares Typenschild und/oder ein oder mehrere elektronische Bremsen.

Die Antriebseinheit (3) ist hierbei direkt elektrisch mit dem Frequenzumrichter (2) über ein Kabel, bestehend aus Anschlussleitungen (6) zum Betreiben des Elektromotors (M) und zusätzlichen Anschlussleitungen (7) zum Betreiben der Sensor-, Aktor- und/oder Datenspeicherelemente der weiteren Komponente (36) verbunden. Dabei findet sowohl die Energieversorgung der weiteren Komponente (36) als auch eine Datenkommunikation mit der weiteren Komponente (36) über die zusätzlichen Anschlussleitungen (7) statt.

Idealerweise sind die zusätzlichen Anschlussleitungen (7) als Koaxialleitung ausgebildet. Damit wird das Risiko einer Störeinstrahlung auf die zusätzlichen Anschlussleitungen (7) bedingt durch das Übersprechen der zum Betreiben des Elektromotors (M) benötigten meist hart schaltenden PWM-Signale auf den Anschlussleitungen (6) minimiert. Idealerweise findet hier eine Datenkommunikation bzw. ein Datenaustausch auch in einem Frequenzbereich statt, der außerhalb des typischen Störspektrums zum Betreiben von Elektromotoren (M), über 500kHz, 1 MHz, 10 MHz, 50Mhz, liegt.

Das Netzteil (4) ist ebenfalls direkt elektrisch über eine Anschlussleitung (8) mit dem Frequenzumrichter (2) verbunden. Dabei wird das Netzteil (4) entweder als ein externes Netzteil ausgeführt, das, über eine separate Schnittstelle, mit dem Frequenzumrichter (2) direkt verbindbar ist, oder das Netzteil (4) ist bereits im Frequenzumrichter (2) integriert ausgeführt. Vorstellbar ist auch eine Variante bestehend aus einem externen Netzteil, welches beispielsweise über eine separate Schnittstelle mit dem Frequenzumrichter (2) das interne Netzteil unterstützt und gemeinsam als Netzteil (4) im Antriebssystem (1) aufgefasst wird. Die Aufgabe des Netzteils (4) besteht allgemein darin, über den Frequenzumrichter (2) und die
zusätzlichen Anschlussleitungen (7), die weitere Komponente (36) der Antriebseinheit (3) zuverlässig mit elektrischer Energie zu versorgen.

Hierfür bekommt der Frequenzumrichter (2) über ein erstes Mittel Zugang zu einer ersten Information (41) über die maximal zur Verfügung stehende elektrische Energie des Netzteils (4). Ferner bekommt der Frequenzumrichter (2) über ein weiteres Mittel Zugang zu einer zweiten Information (31) über den elektrischen Energiebedarf der zusätzlichen Sensor-, Aktor- und/oder Datenspeicherelemente der weiteren Komponente (36). Der Frequenzumrichter (2) hat dabei die spezielle Aufgabe, die erste Information (41) gegen die zweite Information (31) zu plausibilisieren. Diese Plausibilisierung besteht beispielsweise aus einem logischen Vergleich der beiden Informationswerte (41) bzw. (31) zueinander. Das Ergebnis dieser Plausibilisierung (21) wird schließlich dazu verwendet, das gesamte Antriebssystem (1) selbständig in einen der Systemzustände regulärer Betriebszustand (B1), Betriebszustand mit reduziertem elektrischem Energieverbrauch der Antriebseinheit (B2) oder Fehlerzustand (F) zu versetzen.

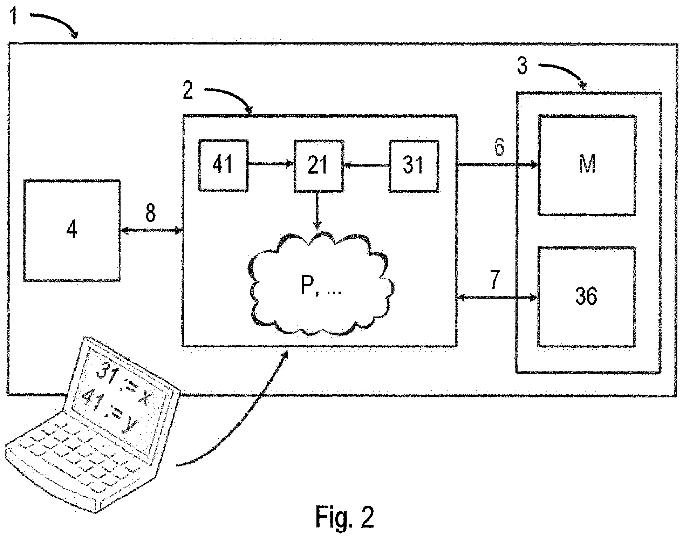

In der Figur 2 ist eine beispielhafte Implementierung des Antriebssystems (1) gezeigt, wie der Frequenzumrichter (2) die erste Information (41) und/oder die zweite Information (31) für die Plausibilisierung ermittelt.

Hierbei wird der Frequenzumrichter (2) des Antriebssystems (1) idealerweise zunächst in einen Parametrierzustand (P) versetzt. Während dieses Parametrierzustands (P) kann ein Anwender, der die jeweils benötigten Informationen der Antriebseinheit (3) und/oder des Netzteils (4) kennt, dem Frequenzumrichter (2) die erste Information (41) und/oder die zweite Information (31) mitteilen. Dies kann beispielsweise über eine Konfigurationssoftware (5), vorzugsweise über die Engineering-Software MOVISUITE ^{®} von SEW-EURODRIVE realisiert werden. Es ist auch denkbar hierfür ein oder mehrere im Antriebssystem (1) befindliche und vom Frequenzumrichter (2) auslesbare DIP-Schalter zu verwenden, die von einem Anwender entsprechend gesetzt werden. Hierbei ist einer bestimmten Konfiguration der DIP-Schalter jeweils ein bestimmter Informationswert zugeordnet, den der Frequenzumrichter (2) entsprechend als erste Information (41) und/oder als zweite Information (31) interpretiert.

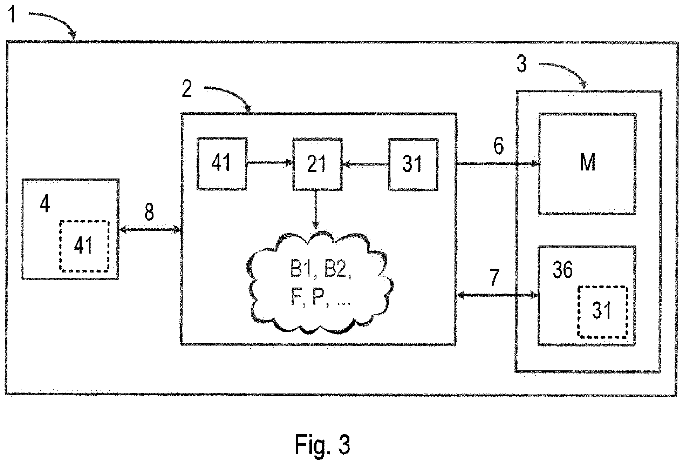

In der Figur 3 ist eine weitere Möglichkeit skizziert, wie der Frequenzumrichter (2) die erste Information (41) und/oder die zweite Information (31) für die Plausibilisierung ermittelt. Hierbei wird der Frequenzumrichter (2) zunächst in einen Parametrierzustand (P) versetzt. Während dieses Parametrierzustands (P) ist der Frequenzumrichter (2) in der Lage über das Netzteil (4) die Antriebseinheit (3) mindestens im Betriebszustand mit reduziertem

Energieverbrauch (B2) zu betreiben. Denkbar ist hier auch, dass die Antriebseinheit (3) bei einem Neustart (POWER-ON) bzw. bei einem RESET des gesamten Antriebssystems (1) zunächst in einem Betriebszustand mit reduziertem Energieverbrauch (B2) der Antriebseinheit (3) startet und der Frequenzumrichter (2) somit in der Lage ist über das Netzteil (4) die Antriebseinheit (3) zu versorgen.

Dabei ist maßgeblich, dass das Netzteil (4) auch dafür ausgelegt sein muss, mindestens die Energie zur Verfügung zu stellen, die die Antriebseinheit (4) im Betriebszustand mit reduziertem Energieverbrauch (B2) auch benötigt.

In diesem Zustand ist der Frequenzumrichter (2) befähigt über die zusätzlichen Anschlussleitungen (7) mindestens die zweite Information (31) abzufragen. Diese zweite Information (31) kann beispielsweise ein Bestandteil eines elektronischen Typenschildes der Antriebseinheit (3) sein, die vom Frequenzumrichter (2) abfragbar ist und die sich auf einem Datenspeicherelement befindet, der der Antriebseinheit (3) eindeutig zuordenbar ist, sodass bei einem Austausch der Antriebseinheit (3) gegen eine neue Antriebseinheit ebenfalls das Datenspeicherelement mit der zweiten Information (31) ausgetauscht wird. Somit kann sichergestellt werden, dass der Wert der zweiten Information (31) stets dem Energiebedarf der aktuell mit dem Frequenzumrichter (2) verbundenen Antriebseinheit (3) entspricht. Vorteilhafterweise ist dabei der Frequenzumrichter (2) ebenfalls befähigt die erste Information (41) direkt vom Netzteil (4) elektronisch abzufragen. Diese erste Information (41) kann beispielsweise ein Bestandteil eines elektronischen Typenschildes des Netzteils (4) sein, die vom Frequenzumrichter (2) elektronisch abfragbar ist und die sich idealerweise auf einem Datenspeicherelement befindet, der dem Netzteil (4) eindeutig zuordenbar ist, sodass bei einem Austausch des Netzteils (4) gegen ein neues Netzteil (4) ebenfalls das Datenspeicherelement mit der ersten Information (41) ausgetauscht wird. Somit kann sichergestellt werden, dass der Wert der ersten Information (41) stets der maximal zur Verfügung stehenden Energie des aktuell mit dem Frequenzumrichter (2) verbundenen Netzteils (4) entspricht.

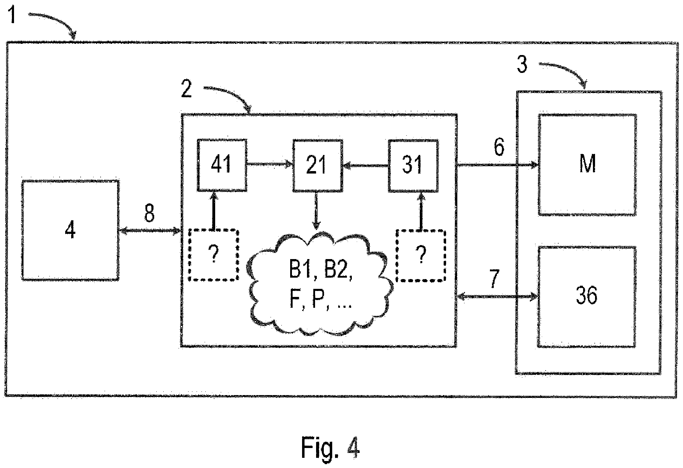

In der Figur 4 wird eine Möglichkeit aufgezeigt, wie der Frequenzumrichter (2) das Ergebnis der Plausibilisierung der ersten Information (41) und der zweiten Information (31) durch einen Test ermittelt.

Hierfür wird die Antriebseinheit (3) zunächst in einer Betriebsart mit maximalem Energiebedarf (33) betreiben. Dies kann realisiert sein, indem beispielsweise alle verfügbaren zusätzlichen Sensor-, Aktor- und/oder Datenspeicherelemente als Verbraucher aktiviert werden. Denkbar ist hier auch, dass nur während des Tests eine zuschaltbare Last (35) als Teil der weiteren Komponente (36) aktivierbar ist, die entweder stellvertretend für eine maximal auftretende Last der Antriebseinheit (3) fungiert oder die zu den bereits aktivierten Verbrauchern - alle verfügbaren zusätzlichen Sensor-, Aktor- und/oder Datenspeicherelemente - noch zusätzlich zuschaltbar ist. Damit ist der Test in der Lage auch für den Worst-Case-Fall, beispielsweise bei einer zusätzlichen Anschlussleitung, die deutlich länger ist als die spezifizierte und im Handbuch maximal erlaubte zusätzliche Anschlussleitung oder durch einen höheren Energieverbrauch der Antriebseinheit (3) durch Verluste bedingt durch eine Erwärmung der zusätzlichen Sensor-, Aktor- und/oder Datenspeicherelemente aufgrund extremer Einsatzbedingungen im industriellen Umfeld, sicher eine Aussage treffen zu können.

Entweder ist dem Frequenzumrichter (2) die erste Information (41) über die maximal zur Verfügung stehenden Energie des Netzteils (4) bekannt, beispielsweise weil diese bereits während des Produktionsprozesses dem Frequenzumrichter (2) mitgeteilt wurde, oder der Frequenzumrichter (2) ist in der Lage durch eine Messung des Energieverbrauchs in der zusätzlichen Anschlussleitung, deren elektrische Signale meist über einen Steckverbinder geführt auch auf einer Platine des Frequenzumrichters (2) physikalisch vorhanden sind und somit für eine Messung innerhalb des Frequenzumrichter (2) stets zur Verfügung stehen, zu entscheiden, ob das Netzteil (4) zum Betreiben der Antriebseinheit (3) sicher ausreicht.

Ist dem Frequenzumrichter (2) weder die erste Information (41) über die maximal zur Verfügung stehende Energie des Netzteils (4) noch die zweite Information (31) über den Energiebedarf der Antriebseinheit (3) zugänglich, so ist es auch vorstellbar, dass der Frequenzumrichter (2) in diesem Zustand der Antriebseinheit (3) mit maximalem Energiebedarf (33) überprüft, ob eine Datenkommunikation zwischen Antriebseinheit (3) und Frequenzumrichter (2) fehlerfrei, d.h. ohne Datenverlust, möglich ist. Tritt in einem definierten Testzeitraum kein Datenkommunikationsfehler auf, geht der Frequenzumrichter (2) davon aus, dass das Netzteil (4) ausreicht, um die Antriebseinheit (4) fehlerfrei betreiben zu können.

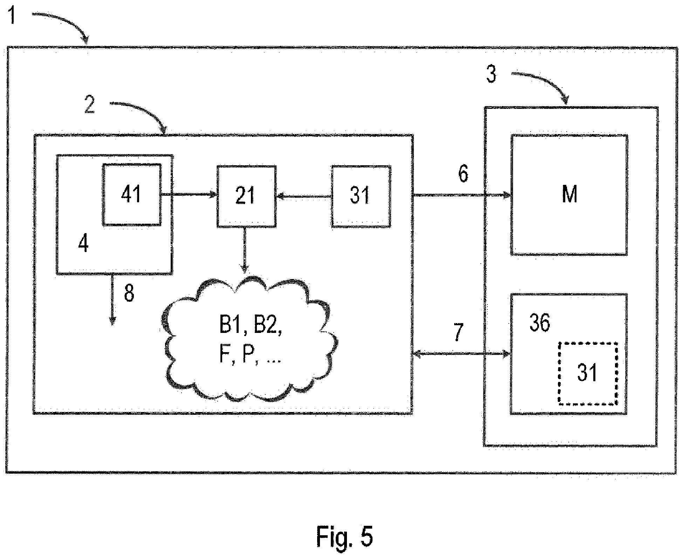

In der Figur 5 ist ein weiteres Ausführungsbeispiel eines erfindungsgemäßen Antriebssystems (1) dargelegt. Dabei wird die zweite Information (31) für die Plausibilisierung vom Frequenzumrichter (2) über einen Test ermittelt während die erste Information (41) bereits auf einem Datenspeicherelement des Frequenzumrichters (2) hinterlegt ist.

Dies ist vor allem dann vorstellbar, wenn bereits im Frequenzumrichter (2) das Netzteil (4) integriert ausgeführt ist. Hierbei wird bereits während des Produktionsprozesses, also direkt bei der Herstellung, die erste Information (41) über die maximal zur Verfügung stehende Energie in einem Datenspeicherelement des Frequenzumrichters (2) hinterlegt. Somit ist dem Frequenzumrichter (2) die erste Information (41) direkt für die Plausibilisierung zugänglich.

Die zweite Information (31) wird durch einen Test wie unter Figur 4 beschrieben ermittelt.

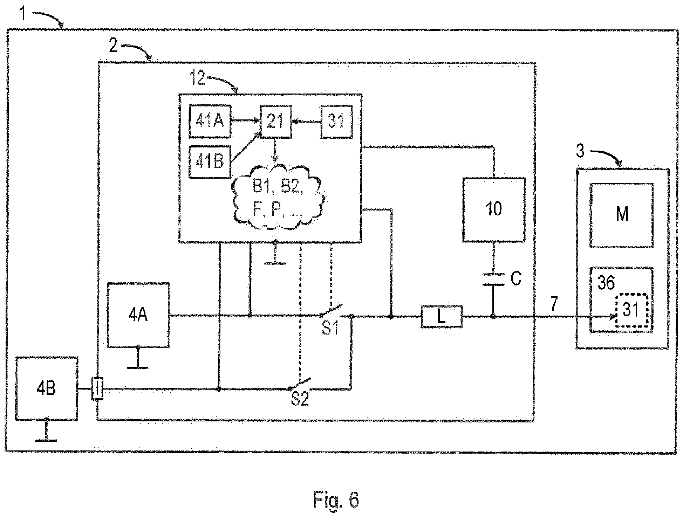

In der Figur 6 ist eine Realisierungsmöglichkeit eines erfindungsgemäßen Antriebssystems (1) dargestellt.

In dieser Ausführung umfasst der Frequenzumrichter (2) ein internes Netzteil (4A) und die Möglichkeit über einen Steckverbinder ein externes Netzteil (4B) anzuschließen. Die Signalelektronik (12) des Frequenzumrichters (2) hat die Möglichkeit zu jedem der Netzteile (4A) bzw. (4B) die erste Information über die maximal verfügbare Energie (41A) bzw. (41B) zu erlangen. Zusätzlich kann die Signalelektronik (12) über ein Kommunikationsmodul (10) die zweite Information über den elektrischen Energiebedarf (31) der weiteren Komponente (36) der Antriebseinheit (3) abfragen. Dazu wird das Datensignal vom Kommunikationsmodul (10) über einen Kondensator auf die Versorgungsleitung aufmoduliert.

Je nachdem welches Netzteil (4A) oder (4B) für den Betrieb der weiteren Komponente der Antriebseinheit (36) geeignet ist, wird die Versorgungsspannung des Netzteils (4A) oder (4B) über einen der Schalter (S1) oder (S2) auf die zusätzliche Anschlussleitung zum Betreiben der weiteren Komponente (7) gelegt. Die Signalelektronik hat dabei noch die Möglichkeit die Spannungen vor und nach den Schaltern (S1) bzw. (S2) zu messen, um so Fehler auf der Versorgungsspannung rechtzeitig zu erkennen.

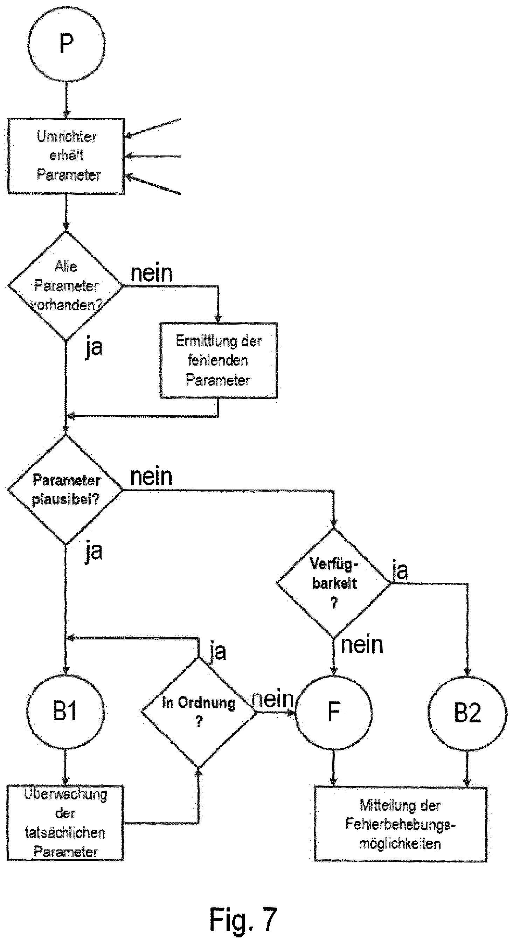

In der Figur 7 ist das Verhalten eines erfindungsgemäßen Antriebssystems (1) schematisch aufgezeigt.

Zunächst wird das Antriebssystem (1) in einen Parametrierzustand (P) versetzt. Dies wird beispielsweise durch eine Konfigurationssoftware (5) erreicht, die, insbesondere über ein Feldbus-System, mit dem Frequenzumrichter (2) Daten austauscht. Die Konfigurationssoftware (5) ist dabei in der Lage dem Frequenzumrichter (2) aufzufordern in den Parametrierzustand (P) zu wechseln. Hierbei wäre auch denkbar, dass ein Anwender über ein Mittel am Frequenzumrichter (2) selbst, beispielsweise über ein Schaltelement oder über einen Sensor

zum Aufnehmen von RFID-Signale, das Antriebssystem (1) in den Parametrierzustand (P) versetzt.

In diesem Zustand (P) überprüft der Frequenzumrichter (2), ob ihm bereits die aktuellen Werte für die erste Information (41) und die zweite Information (31) zur Verfügung stehen. Ein Anwender hat zu diesem Zeitpunkt auch die Möglichkeit über eine Konfigurationssoftware (5) dem Frequenzumrichter (2) die Werte für die erste Information (41) und/oder die zweite Information (31) mitzuteilen.

Der Frequenzumrichter (2) ist auch in der Lage selbständig nach den Werten zu suchen, indem er beginnt beispielsweise das Typenschild von Antriebseinheit (3) und Netzteil (4), sofern verfügbar, abzufragen.

Sind die erste Information (41) und die zweite Information (31) schließlich vorhanden beginnt der Frequenzumrichter (2) mit der Überprüfung, ob die beiden Parameter plausibel sind. Ist die erste Information (41) größer oder gleich der zweiten Information (31), so wechselt das Antriebssystem (1) in den regulären Betriebszustand (B1). Ergibt die Plausibilisierung, dass die erste Information (41) kleiner als die zweite Information (31) ist, so wechselt das Antriebssystem (1) entweder in den Fehlerzustand (F) oder in den Betriebszustand (B2) mit einer Antriebseinheit (3), die nur in der Betriebsart mit reduziertem Energiebedarf (32) betrieben wird. Mindestens im Fehlerzustand (F) ist der Frequenzumrichter (2) in der Lage über ein Mittel, vorzugsweise über die Konfigurationssoftware (5), eine Nachbestellung von Netzteil (4) und/oder Antriebseinheit (3) anzubieten, wobei deren Eigenschaften an die erste Information (41) und/oder die zweite Information (31) angepasst sind. Ergibt die Plausibilisierung des Frequenzumrichters (2) beispielsweise, dass das Netzteil (4) der Antriebseinheit (1) zu schwach ausgelegt ist und nicht die benötigte Energie zum Betrieben der Antriebseinheit (3) zur Verfügung stellen kann, wird dem Anwender ein weiteres Netzteil und/oder ein Netzteil mit entsprechend ausreichender Energie angeboten.

Während des regulären Betriebs (B1) des Antriebssystems (1) ist auch vorstellbar, dass der Frequenzumrichter (2) den tatsächlichen Energieverbrauch bzw. Energiebedarf (34) in regelmäßigen Abständen, z.B. zyklisch alle 10 ms, 100ms, 1 s, 10 s, beispielsweise über eine Messung und/oder einem Datenaustausch mit der Antriebseinheit (3) überprüft, wobei sowohl ein tatsächlicher ermittelter Energiebedarf größer als die zweite Information (31) und/oder ein fehlgeschlagener Datenaustausch, als auch eine tatsächlich zur Verfügung stehende Energie (42) kleiner als die erste Information (41) das Antriebssystem (1) in den Fehlerzustand (F) versetzt.

Als weiteres Verhalten eines erfindungsgemäßen Antriebssystems (1) ist auch vorstellbar, dass die erste Information (41) und/oder die zweite Information (31) lizenzabhängig begrenzt wird. Es könnte beispielsweise ein Netzteil (4) in einem Frequenzumrichter (3) integriert ausgeführt sein, welches standardmäßig in der Lage ist grundsätzlich mehr Energie zu liefern. Somit kann ein Frequenzumrichter (2) produziert werden, welchen es in unterschiedlichen Ausprägungen bezüglich der zur Verfügung stellbaren Energie zum Betreiben der zusätzlichen Sensor-, Aktor- und/oder Datenspeicherelemente der Antriebseinheit (3) gibt. Mittels Konfigurationssoftware (5) ist es möglich, dass diese Begrenzung nach den Bedürfnissen eines Anwenders nach Erhalt eines Lizenz-Schlüssels angepasst werden kann.

Ist das Antriebssystem im Fehlerzustand (F) und hat der Frequenzumrichter (2) und/oder die Konfigurationssoftware (5) erkannt, dass ein Netzteil (4) verwendet wird, welches die fehlende Energie liefern kann, so wird dem Anwender die Möglichkeit zum Erwerb des benötigten Lizenz-Schlüssels angeboten.

Die folgende Bezugszeichenliste wird in die Beschreibung einbezogen und erläutert weitere Merkmale der Erfindung.

### Bezugszeichenliste

- 1: Antriebssystem
- 10: Kommunikationsmodul
- 12: Signalelektronik
- 2: Frequenzumrichter
- 21: Plausibilisierung
- 3: Antriebseinheit
- 31: Zweite Information über den elektrischen Energiebedarf
- 32: Betriebsart mit reduziertem elektrischem Energiebedarf
- 321: Maximalwert an elektrischer Energie
- 33: Betriebsart mit maximalem elektrischen Energiebedarf
- 34: Tatsächlicher elektrischer Energiebedarf
- 35: Zuschaltbare Last
- 36: Weitere Komponente der Antriebseinheit
- 4, 4A, 4B: Netzteil
- 41, 41A, 41B: Erste Information über maximal zur Verfügung stehender elektrischer Energie
- 42: Tatsächlich zur Verfügung stehende elektrische Energie
- 5: Konfigurationssoftware
- 6: Anschlussleitungen zum Betreiben des Elektromotors
- 7: Zusätzliche Anschlussleitungen zum Betreiben der weiteren Komponente
- 8: Anschlussleitung zur Anbindung des Netzteils
- P: Parametrierzustand
- B1: Regulärer Betriebszustand
- B2: Betriebszustand mit reduziertem elektrischem Energieverbrauch der Antriebseinheit
- F: Fehlerzustand
- I: Schnittstelle
- M: Elektromotor
- C: Kapazität
- L: Induktivität
- S: Schalter

## Patentansprüche

1. Verfahren zum Betreiben eines Antriebssystems (1), wobei
sich das Antriebssystem (1) in einem Parametrierzustand (P) befindet, wobei in einem ersten Verfahrensschritt
ein Frequenzumrichter (2) eine erste Information über die maximal zur Verfügung stehenden elektrischen Energie (41) eines Netzteils (4) und/oder eine zweite Information über den elektrischen Energiebedarf (31) einer weiteren Komponente der Antriebseinheit (36) vom Anwender über eine Konfigurationssoftware mitgeteilt bekommen kann,
und/oder wobei der Frequenzumrichter (2) die erste Information (41) und/oder die zweite Information (31) aus mindestens einem elektronischen Typenschild auslesen kann,
wobei in einem zweiten, insbesondere dem ersten Verfahrensschritt zeitlich nachfolgenden, Verfahrensschritt
der Frequenzumrichter (2) die erste Information (41) und die zweite Information (31) auf Vollständigkeit prüft,
wobei eine fehlende erste Information (41) und/oder fehlende zweite Information (31) durch ein Messverfahren ermittelt wird,
wobei in einem dritten, insbesondere dem ersten Verfahrensschritt zeitlich nachfolgenden, Verfahrensschritt
der Frequenzumrichter (2) die erste Information (41) und die zweite Information (31) auf Plausibilität prüft,
wobei eine erste Information (41) größer als oder gleich der zweiten Information (31) zu einem Übergang in einen regulären Betriebszustand (B1) führt,
wobei eine erste Information (41) kleiner als die zweite Information (31) zu einem Übergang in einen Fehlerzustand (F) oder einen Betriebszustand mit reduziertem, elektrischem Energieverbrauch (B2) in der Antriebseinheit (3) führt.

2. Verfahren nach Anspruch 1,
**dadurch gekennzeichnet, dass**
im regulären Betriebszustand (B1) ein tatsächlicher Energiebedarf (34) der weiteren Komponente der Antriebseinheit (36) und/oder eine tatsächlich zur Verfügung stehende, elektrische Energie (42) des Netzteils (4) überwacht wird,
wobei eine toleranzmäßig zu große Abweichung von der ersten Information (41) und/oder der zweiten Information (31) zu einem Übergang in den Fehlerzustand (F) führt.

3. Antriebssystem (1) eingerichtet zur Durchführung des Verfahrens nach Anspruch 1 oder 2, umfassend
den Frequenzumrichter (2),
die Antriebseinheit (3) und
das Netzteil (4),
wobei die Antriebseinheit (3) einen Elektromotor (M) und mindestens eine weitere Komponente (36), bestehend aus mindestens einem Sensor-, Aktor und/oder Datenspeicherelement, umfasst und
wobei das Netzteil (4) die weitere Komponente (36) der Antriebseinheit (3) über den Frequenzumrichter (2) und zusätzliche Anschlussleitungen (7) mit elektrischer Energie versorgt,
wobei der Frequenzumrichter (2) dazu ausgebildet ist, eine erste Information (41) über die maximal zur Verfügung stehende elektrische Energie des Netzteils (4) zu erhalten,
wobei der Frequenzumrichter (2) dazu ausgebildet ist, eine zweite Information (31) über den elektrischen Energiebedarf der weiteren Komponente der Antriebseinheit (3) zu erhalten, wobei der Frequenzumrichter (2) dazu ausgebildet ist, die erste Information (41) gegen die zweite Information (31) zu plausibilisieren,
wobei das Entscheidungskriterium für die Plausibilisierung durch einen logischen Vergleich der ersten Information (41) mit der zweiten Information (31) gebildet wird und wobei der Frequenzumrichter (2) dazu ausgebildet ist, in Abhängigkeit des Ergebnisses dieser Plausibilisierung den Systemzustand des Antriebssystems (1) anzupassen,
wobei der Frequenzumrichter (2) dazu ausgebildet ist, die erste Information (41) und/oder die zweite Information (31) von einem Anwender über ein Mittel, insbesondere über eine Konfigurationssoftware (5) und/oder einem DIP-Schalter, zu erhalten,
wobei
- eine Konfigurationssoftware (5) als besagtes Mittel dazu ausgebildet ist, im Fehlerzustand (F) eine Nachbestellung von Netzteil (4) und/oder Antriebseinheit (3) anzubieten, wobei deren elektrische Eigenschaften an die erste Information (41) und/oder die zweite Information (31) angepasst sind,
- oder wobei das Antriebssystem (1) dazu ausgebildet ist, die erste Information (41) und/oder die zweite Information (31) lizenzabhängig zu begrenzen,
- oder wobei eine Konfigurationssoftware (5) als besagtes Mittel dazu ausgebildet ist, im Fehlerzustand (F) eine Lizenz-Freischaltung anzubieten, wobei deren elektrische Eigenschaften an die erste Information (41) und/oder die zweite Information (31) angepasst sind.

4. Antriebssystem (1) nach Anspruch 3,
**dadurch gekennzeichnet, dass**
der Frequenzumrichter (2) dazu ausgebildet ist, die erste Information (41) und/oder die zweite Information (31) während eines Parametrierzustands (P) zu erhalten.

5. Antriebssystem (1) nach einem der Ansprüche 3 bis 4,
**dadurch gekennzeichnet, dass**
der Frequenzumrichter (2) dazu ausgebildet ist, die erste Information (41) elektronisch von dem Netzteil (4) und/oder die zweite Information (31) elektronisch von der Antriebseinheit (3) auszulesen.

6. Antriebssystem (1) nach einem der Ansprüche 3 bis 5,
**dadurch gekennzeichnet, dass**
der Frequenzumrichter (2) dazu ausgebildet ist, die erste Information (41) und/oder die zweite Information (31) durch einen Test zu ermitteln,
und/oder dass
der Frequenzumrichter (2) das Netzteil (4) umfasst,
wobei der Frequenzumrichter (2) dazu ausgebildet ist, die erste Information (41) bereits werksseitig bei Herstellung im Frequenzumrichter (2) hinterlegt zu bekommen,
und/oder dass
die Antriebseinheit (3) eine Betriebsart mit reduziertem elektrischem Energiebedarf (32) aufweist,
wobei diese Betriebsart (32) mindestens das elektronische Auslesen der zweiten Information (31) ermöglicht
und wobei der reduzierte elektrische Energiebedarf (32) einen Maximalwert (321) sicher nicht überschreitet,
insbesondere wobei die Antriebseinheit (3) dazu ausgebildet ist, nach einem Neustart immer in der Betriebsart mit reduziertem elektrischem Energiebedarf (32) zu starten,
und/oder dass
das Antriebssystem (1) dazu ausgebildet ist, in einen Betriebszustand (B1) zu wechseln, wenn die erste Information (41) über die maximal zur Verfügung stehender elektrischer Energie des Netzteils größer oder gleich der zweiten Information (31) über den elektrischen Energiebedarf der weiteren Komponente der Antriebseinheit ist.

7. Antriebssystem (1) nach einem der Ansprüche 3 bis 6,
**dadurch gekennzeichnet, dass**
das Antriebssystem (1) dazu ausgebildet ist, in einen Fehlerzustand (F) zu wechseln, wenn die erste Information (41) über die maximal zur Verfügung stehender elektrischer Energie des Netzteils kleiner als die zweite Information (31) über den elektrischen Energiebedarf der weiteren Komponente der Antriebseinheit ist

8. Antriebssystem (1) nach Anspruch 6,
**dadurch gekennzeichnet, dass**
das Antriebssystem (1) dazu ausgebildet ist, in einen Betriebszustand (B2) zu wechseln, wenn die erste Information (41) über die maximal zur Verfügung stehender elektrischer Energie des Netzteils kleiner als die zweite Information (31) über den elektrischen Energiebedarf der weiteren Komponente der Antriebseinheit ist, wobei die Antriebseinheit (3) nur in der Betriebsart mit reduziertem elektrischem Energiebedarf (32) betrieben wird.

9. Antriebssystem (1) nach Anspruch 6 oder 8,
**dadurch gekennzeichnet, dass**
der Frequenzumrichter (2) dazu ausgebildet ist, den tatsächlichen elektrischen Energiebedarf (34) der Antriebseinheit (3) zu überwachen,
wobei der tatsächliche elektrische Energiebedarf (34) gemessen und/oder ein Datenaustausch mit der Antriebseinheit (3) überprüft wird,
wobei das Antriebssystem (1) dazu ausgebildet ist, in einen Fehlerzustand (F) zu wechseln, wenn der tatsächliche Energiebedarf größer als die zweite Information (31) ist und/oder der Datenaustausch mit der Antriebseinheit (3) nicht möglich ist.

10. Antriebssystem (1) nach einem der Ansprüche 7 oder 9,
**dadurch gekennzeichnet, dass**
der Frequenzumrichter (2) dazu ausgebildet ist, die zur Verfügung gestellte elektrische Energie des Netzteils (4) zu überwachen,
wobei das Antriebssystem (1) dazu ausgebildet ist, in den Fehlerzustand (F) zu wechseln, wenn die tatsächliche zur Verfügung stehende elektrische Energie (42) kleiner ist als die erste Information (41) über die maximal zur Verfügung stehender elektrischer Energie des Netzteils.

11. Antriebssystem (1) nach einem der Ansprüche 3 bis 10,
**dadurch gekennzeichnet, dass**
der Frequenzumrichter (2) dazu ausgebildet ist, die Funktionsfähigkeit des Antriebssystems (1) zu testen, indem die Antriebseinheit (3) in einer Betriebsart mit maximalem elektrischen Energiebedarf (33) betrieben wird,
insbesondere wobei die Antriebseinheit (3) dazu ausgebildet ist, nur während des Tests der Funktionsfähigkeit des Antriebssystems (1) eine zuschaltbare Last (35) zu aktivieren.

12. Antriebssystem (1) nach einem der Ansprüche 3 bis 11,
**dadurch gekennzeichnet, dass**
sowohl die elektrische Energieversorgung der weiteren Komponente (36) als auch der Datenaustausch mit der weiteren Komponente (36) über eine gemeinsame Zweidrahtleitung, insbesondere über ein Koaxialkabel, realisiert sind.

## Claims

1. Method for operating a drive system (1),
wherein the drive system (1) is in a parameterisation state (P),
wherein, in a first method step, a frequency converter (2) can be given, by the user via an item of configuration software, a first piece of information regarding the maximum electrical energy (41) available from a power supply module (4) and/or a second piece of information regarding the electrical energy demand (31) of a further component of the drive unit (36), and/or wherein the frequency converter (2) can read out the first piece of information (41) and/or the second piece of information (31) from at least one electronic rating plate, wherein, in a second method step, which in particular chronologically follows the first method step, the frequency converter (2) checks the first piece of information (41) and the second piece of information (31) for completeness,
wherein a missing first piece of information (41) and/or a missing second piece of information (31) is/are determined by a measurement method,
wherein, in a third method step, which in particular chronologically follows the first method step, the frequency converter (2) checks the first piece of information (41) and the second piece of information (31) for plausibility,
wherein, if a first piece of information (41) is greater than or equal to the second piece of information (31), this leads to a transition into a regular operating state (B1), wherein, if a first piece of information (41) is less than the second piece of information (31), this leads to a transition into a fault state (F) or into an operating state having reduced electrical energy consumption (B2) in the drive unit (3).

2. Method according to claim 1,
**characterised in that**
in the regular operating state (B1), an actual energy demand (34) of the further component of the drive unit (36) and/or an amount of electrical energy (42) actually available from the power supply module (4) is/are monitored,
and too great a deviation of the first piece of information (41) and/or the second piece of information (31) in tolerance terms leads to a transition into the fault state (F).

3. Drive system (1) configured to carry out the method according to claim 1 or claim 2, comprising
the frequency converter (2),
the drive unit (3) and
the power supply module (4),
wherein the drive unit (3) comprises an electric motor (M) and at least one further component (36), consisting of at least one sensor element, actuator element and/or data storage element, and
wherein the power supply module (4) supplies electrical energy to the further component (36) of the drive unit (3) by means of the frequency converter (2) and additional connection lines (7),
wherein the frequency converter (2) is configured to obtain a first piece of information (41) regarding the maximum electrical energy available from the power supply module (4), wherein the frequency converter (2) is configured to obtain a second piece of information (31) regarding the electrical energy demand of the further component of the drive unit (3), wherein the frequency converter (2) is configured to check the plausibility of the first piece of information (41) against the second piece of information (31),
wherein the decisive criterion for the plausibility check is formed by a logical comparison of the first piece of information (41) with the second piece of information (31),
and wherein the frequency converter (2) is configured to adjust the system state of the drive system (1) on the basis of the result of this plausibility check,
wherein the frequency converter (2) is configured to obtain the first piece of information (41) and/or the second piece of information (31) from a user via a means, in particular via an item of configuration software (5) and/or a DIP switch,
- wherein, in the fault state (F), an item of configuration software (5), as said means, is configured to offer a follow-up order of a power supply module (4) and/or drive unit (3), wherein the electrical properties thereof are adapted to the first piece of information (41) and/or the second piece of information (31),
- or wherein the drive system (1) is configured to restrict the first piece of information (41) and/or the second piece of information (31) depending on a licence,
- or wherein, in the fault state (F), an item of configuration software (5), as said means, is configured to offer a licence activation, wherein the electrical properties thereof are adapted to the first piece of information (41) and/or the second piece of information (31).

4. Drive system (1) according to claim 3,
**characterised in that**
the frequency converter (2) is configured to obtain the first piece of information (41) and/or the second piece of information (31) during a parameterisation state (P).

5. Drive system (1) according to any of claims 3 to 4,
**characterised in that**
the frequency converter (2) is configured to electronically read out the first piece of information (41) from the power supply module (4) and/or to electronically read out the second piece of information (31) from the drive unit (3).

6. Drive system (1) according to any of claims 3 to 5,
**characterised in that**
the frequency converter (2) is configured to determine the first piece of information (41) and/or the second piece of information (31) using a test,
and/or **in that**
the frequency converter (2) comprises the power supply module (4),
the frequency converter (2) being configured to already be given the first piece of information (41) at the factory during manufacture by said first piece of information being stored in the frequency converter (2),
and/or **in that**
the drive unit (3) has an operating mode having reduced electrical energy demand (32),
this operating mode (32) at least allowing the second piece of information (31) to be electronically read out,
and the reduced electrical energy demand (32) reliably not exceeding a maximum value (321),
the drive unit (3) in particular being configured, after a restart, to always launch in the operating mode having reduced electrical energy demand (32),
and/or **in that**
the drive system (1) is configured to switch into an operating state (B1) when the first piece of information (41) regarding the maximum electrical energy available from the power supply module is greater than or equal to the second piece of information (31) regarding the electrical energy demand of the further component of the drive unit.

7. Drive system (1) according to any of claims 3 to 6,
**characterised in that**
the drive system (1) is configured to switch into a fault state (F) when the first piece of information (41) regarding the maximum electrical energy available from the power supply module is less than the second piece of information (31) regarding the electrical energy demand of the further component of the drive unit.

8. Drive system (1) according to claim 6,
**characterised in that**
the drive system (1) is configured to switch into an operating state (B2) when the first piece of information (41) regarding the maximum electrical energy available from the power supply module is less than the second piece of information (31) regarding the electrical energy demand of the further component of the drive unit, the drive unit (3) being operated solely in the operating mode having reduced electrical energy demand (32).

9. Drive system (1) according to claim 6 or claim 8,
**characterised in that**
the frequency converter (2) is configured to monitor the actual electrical energy demand (34) of the drive unit (3),
the actual electrical energy demand (34) being measured, and/or data exchange with the drive unit (3) being verified,
the drive system (1) being configured to switch into a fault state (F) when the actual energy demand is greater than the second piece of information (31) and/or the data exchange with the drive unit (3) is not possible.

10. Drive system (1) according to any of claims 7 or 9,
**characterised in that**
the frequency converter (2) is configured to monitor the electrical energy made available by the power supply module (4),
the drive system (1) being configured to switch into the fault state (F) when the electrical energy (42) actually available is less than the first piece of information (41) regarding the maximum electrical energy available from the power supply module.

11. Drive system (1) according to any of claims 3 to 10,
**characterised in that**
the frequency converter (2) is configured to test the proper functioning of the drive system (1) by operating the drive unit (3) in an operating mode having maximum electrical energy demand (33),
the drive unit (3) in particular being configured to activate a connectable load (35) only during the test for the proper functioning of the drive system (1).

12. Drive system (1) according to any of claims 3 to 11,
**characterised in that**
both the electrical energy supply of the further component (36) and the data exchange with the further component (36) are implemented by means of a shared two-wire line, in particular by means of a coaxial cable.

## Revendications

1. Procédé d'actionnement d'un système d'entraînement (1),
lequel système d'entraînement (1) se trouve dans un état de paramétrage (P), sachant que, lors d'une première étape opératoire,
un convertisseur de fréquence (2) peut recevoir notification émanant de l'utilisateur, par l'intermédiaire d'un logiciel de configuration, d'une première information (41) relative à l'énergie électrique maximale disponible d'une partie (4) d'un réseau, et/ou d'une seconde information (31) relative au besoin en énergie électrique d'un autre composant (36) de l'unité d'entraînement,
et/ou que le convertisseur de fréquence (2) peut lire la première information (41) et/ou la seconde information (31) à partir d'au moins une plaque signalétique électronique,
sachant que, lors d'une deuxième étape opératoire succédant notamment dans le temps à la première étape opératoire,
ledit convertisseur de fréquence (2) vérifie la complétude de ladite première information (41) et de ladite seconde information (31),
une première information (41) manquante et/ou une seconde information (31) manquante étant alors spécifiée(s) par un procédé de mesure,
sachant que, lors d'une troisième étape opératoire succédant notamment dans le temps à ladite première étape opératoire,
ledit convertisseur de fréquence (2) vérifie la plausibilité de ladite première information (41) et de ladite seconde information (31),
une première information (41) supérieure ou égale à la seconde information (31) impliquant alors une transition vers un état de fonctionnement régulier (B1),
une première information (41) inférieure à ladite seconde information (31) impliquant une transition vers un état d'erreur (F) ou vers un état de fonctionnement (B2) à consommation d'énergie électrique réduite dans l'unité d'entraînement (3).

2. Procédé selon la revendication 1,
**caractérisé par le fait**
**qu'**un besoin effectif en énergie (34) de l'autre composant (36) de l'unité d'entraînement, et/ou une énergie électrique (42) effectivement disponible de la partie (4) du réseau, est (sont) surveillé(e)(s) à l'état de fonctionnement régulier (B1),
sachant qu'un écart par rapport à la première information (41) et/ou à la seconde information (31), trop grand en termes de tolérance, implique une transition vers l'état d'erreur (F).

3. Système d'entraînement (1) agencé pour la mise en œuvre du procédé selon la revendication 1 ou 2,
comprenant
le convertisseur de fréquence (2),
l'unité d'entraînement (3) et
la partie (4) de réseau,
sachant que ladite unité d'entraînement (3) inclut un moteur électrique (M) et au moins un autre composant (36) constitué d'au moins un élément de détection, d'un actionneur et/ou d'un élément de stockage de données,
et sachant que ladite partie (4) du réseau alimente en énergie électrique ledit autre composant (36) de ladite unité d'entraînement (3), par l'intermédiaire dudit convertisseur de fréquence (2) et de conducteurs de raccordement (7) additionnels,
le convertisseur de fréquence (2) étant conçu pour recevoir une première information (41) par l'entremise de l'énergie électrique maximale disponible de ladite partie (4) du réseau,
ledit convertisseur de fréquence (2) étant conçu pour recevoir une seconde information (31) par l'entremise du besoin en énergie électrique de l'autre composant de l'unité d'entraînement (3), ledit convertisseur de fréquence (2) étant conçu pour examiner la plausibilité de ladite première information (41) vis-à-vis de ladite seconde information (31),
auquel cas le critère décisif de plausibilité est instauré par une comparaison logique de ladite première information (41) avec ladite seconde information (31),
ledit convertisseur de fréquence (2) étant conçu pour adapter l'état du système d'entraînement (1) en fonction du résultat de cet examen de plausibilité,
ledit convertisseur de fréquence (2) étant conçu pour recevoir ladite première information (41) et/ou ladite seconde information (31), émanant d'un utilisateur, par l'intermédiaire d'un moyen et notamment par l'intermédiaire d'un logiciel de configuration (5) et/ou d'un commutateur DIP,
étant précisé
- qu'un logiciel de configuration (5) représentant le moyen précité est conçu pour offrir un réassort de la partie (4) du réseau et/ou de l'unité d'entraînement (3), à l'état d'erreur (F), les propriétés électriques de ces dernières étant adaptées à ladite première information (41) et/ou à ladite seconde information (31),
- ou que ledit système d'entraînement (1) est conçu pour limiter ladite première information (41) et/ou ladite seconde information (31) d'une manière tributaire d'une licence,
- ou bien qu'un logiciel de configuration (5) représentant le moyen précité est conçu pour offrir, à l'état d'erreur (F), une activation de licence dont les propriétés électriques sont adaptées à ladite première information (41) et/ou à ladite seconde information (31).

4. Système d'entraînement (1) selon la revendication 3,
**caractérisé par le fait que**
le convertisseur de fréquence (2) est conçu pour recevoir la première information (41) et/ou la seconde information (31) durant un état de paramétrage (P).

5. Système d'entraînement (1) selon l'une des revendications 3 à 4,
**caractérisé par le fait que**
le convertisseur de fréquence (2) est conçu pour lire la première information (41) électroniquement depuis la partie (4) du réseau, et/ou la seconde information (31) électroniquement depuis l'unité d'entraînement (3).

6. Système d'entraînement (1) selon l'une des revendications 3 à 5,
**caractérisé par le fait que**
le convertisseur de fréquence (2) est conçu pour spécifier la première information (41) et/ou la seconde information (31) par le biais d'un test ;
et/ou **par le fait que**
ledit convertisseur de fréquence (2) inclut la partie (4) du réseau,
lequel convertisseur de fréquence (2) est conçu pour obtenir la première information (41) déjà mémorisée en usine dans ledit convertisseur de fréquence (2) au stade de la fabrication ;
et/ou **par le fait que**
l'unité d'entraînement (3) présente un mode de fonctionnement (32) à besoin en énergie électrique réduit,
ce mode de fonctionnement (32) permettant au moins la lecture électronique de la seconde information (31),
et ledit besoin en énergie électrique réduit (32) n'excédant assurément pas une valeur maximale (321),
sachant notamment que ladite unité d'entraînement (3) est conçue pour démarrer toujours dans ledit mode de fonctionnement (32) à besoin en énergie électrique réduit, après un redémarrage ; et/ou **par le fait que**
ledit système d'entraînement (1) est conçu pour passer à un état de fonctionnement (B1) lorsque la première information (41), relative à l'énergie électrique maximale disponible de la partie du réseau, est supérieure ou égale à la seconde information (31) relative au besoin en énergie électrique de l'autre composant de ladite unité d'entraînement.

7. Système d'entraînement (1) selon l'une des revendications 3 à 6,
**caractérisé par le fait que**
ledit système d'entraînement (1) est conçu pour passer à un état d'erreur (F) lorsque la première information (41), relative à l'énergie électrique maximale disponible de la partie du réseau, est inférieure à la seconde information (31) relative au besoin en énergie électrique de l'autre composant de l'unité d'entraînement.

8. Système d'entraînement (1) selon la revendication 6,
**caractérisé par le fait que**
ledit système d'entraînement (1) est conçu pour passer à un état de fonctionnement (B2) lorsque la première information (41), relative à l'énergie électrique maximale disponible de la partie du réseau, est inférieure à la seconde information (31) relative au besoin en énergie électrique de l'autre composant de l'unité d'entraînement, laquelle unité d'entraînement (3) est actionnée uniquement dans le mode de fonctionnement (32) à besoin en énergie électrique réduit.

9. Système d'entraînement (1) selon la revendication 6 ou 8,
**caractérisé par le fait que**
le convertisseur de fréquence (2) est conçu pour surveiller le besoin effectif en énergie électrique (34) de l'unité d'entraînement (3),
ledit besoin effectif en énergie électrique (34) étant mesuré, et/ou un échange de données avec ladite unité d'entraînement (3) étant vérifié,
ledit système d'entraînement (1) étant conçu pour passer à un état d'erreur (F) lorsque ledit besoin effectif en énergie est supérieur à la seconde information (31), et/ou lorsque ledit échange de données avec l'unité d'entraînement (3) n'est pas possible.

10. Système d'entraînement (1) selon l'une des revendications 7 ou 9,
**caractérisé par le fait que**
le convertisseur de fréquence (2) est conçu pour surveiller l'énergie électrique disponible de la partie (4) du réseau,
ledit système d'entraînement (1) étant conçu pour passer à l'état d'erreur (F) lorsque l'énergie électrique disponible (42) effective est inférieure à la première information (41) relative à l'énergie électrique maximale disponible de ladite partie du réseau.

11. Système d'entraînement (1) selon l'une des revendications 3 à 10,
**caractérisé par le fait que**
le convertisseur de fréquence (2) est conçu pour tester l'aptitude fonctionnelle dudit système d'entraînement (1) par actionnement de l'unité d'entraînement (3) dans un mode de fonctionnement (33) à besoin maximal en énergie électrique,
sachant notamment que ladite unité d'entraînement (3) est conçue pour activer une charge (35), apte à la mise en circuit, uniquement au cours du test de l'aptitude fonctionnelle dudit système d'entraînement (1).

12. Système d'entraînement (1) selon l'une des revendications 3 à 11,
**caractérisé par le fait que**
tant l'alimentation en énergie électrique de l'autre composant (36), que l'échange de données avec ledit autre composant (36), sont concrètement assurés par l'intermédiaire d'un conducteur bifilaire commun, notamment par l'intermédiaire d'un câble coaxial.
